# FASCICULE DE BREVET EUROPEEN

(11) **EP 2 406 678 B1**
(45) Date de publication et mention de la délivrance du brevet: **25.04.2018**
(21) Numéro de dépôt: 10707535.0
(22) Date de dépôt: 10.03.2010
(51) Int. Cl.: G02B 6/44

(54) **DISPOSITIF D'EXTRACTION D'UN ELEMENT OPTIQUE DANS UN CABLE OPTIQUE ET PROCEDE ASSOCIE**
EINRICHTUNG ZUM EXTRAHIEREN EINES OPTISCHEN ELEMENTS IN EINEM OPTISCHEN KABEL UND DIESBEZÜGLICHES VERFAHREN
DEVICE FOR EXTRACTING AN OPTICAL ELEMENT IN AN OPTICAL CABLE, AND RELATED METHOD

(30) Priorité: 10.03.2009 FR 0951482
(43) Date de publication de la demande: 18.01.2012
(73) Titulaire: Acome Société Coopérative de Production, Société Anonyme, à capital variable, 75008 Paris (FR)
(72) Inventeur: LALLINEC, Patrice, 14500 Maisoncelles la Jourdan (FR); FILLATRE, Daniel, 50140 Romagny (FR); BREUX, Pascal, 50300 Saint Martin des Champs (FR); CHEVALIER, Pacôme, 35140 Mezieres sur Couesnon (FR)
(74) Mandataire: Regimbeau
(86) Numéro de dépôt international: PCT/EP2010/053037
(87) Numéro de publication internationale: WO 2010/103042

(56) Documents cités:
- WO-A-98/30156
- US-A- 5 507 769
- US-A1- 2004 098 007
- US-A1- 2005 209 624
- US-A1- 2007 263 965
- Mary I Frecker ET AL: "Laparoscopic Multifunctional Instruments: Design and Testing of Initial Prototypes", JSLS, Journal of the Society of Laparoendoscopic Surgeons, 1 January 2005 (2005-01-01), pages 105-112, XP055235072, United States Retrieved from the Internet: URL:http://www.ncbi.nlm.nih.gov/pmc/articl es/PMC3015555/pdf/jsls-9-1-105.pdf [retrieved on 2015-12-09]

## Description

### DOMAINE DE L'INVENTION

L'invention concerne un dispositif pour extraire un élément optique d'un câble optique et un procédé associé.

### ETAT DE LA TECHNIQUE

Le raccordement d'un abonné à un réseau optique nécessite de réaliser une opération de dérivation d'un ou plusieurs modules de fibres optiques à partir d'un câble optique principal.

Une opération de dérivation conventionnelle consiste à enlever la gaine de protection du câble sur une longueur légèrement supérieure à la longueur de module que l'on souhaite dériver. Le module est ensuite sélectionné et coupé pour pouvoir être extrait de la gaine.

Un inconvénient de cette technique est qu'elle nécessite d'enlever la gaine sur une portion de relativement grande longueur qui interrompt la protection des modules procurée par la gaine. La protection doit ensuite être reconstituée afin de rétablir l'intégrité mécanique du câble.

Un autre inconvénient de cette technique est qu'elle nécessite de pouvoir accéder au câble sur une grande longueur.

Dans le cas d'un câble optique installé dans une conduite sous-terraine, des chambres d'accès sont généralement prévues dans lesquelles une portion du câble (présentant typiquement une longueur de deux mètres) est lovée.

De manière analogue, dans le cas d'un câble aérien ou installé sur une façade, des boîtiers d'accès au câble permettent de stocker des portions de câble nécessaires pour pratiquer des dérivations.

Le document FR 2 810 747 A1 décrit un câble optique à accessibilité continue, comprenant une gaine de protection de section ovale entourant une cavité présentant en coupe transversale deux axes sensiblement perpendiculaires se croisant au centre de la cavité, et au moins deux fibres optiques éventuellement assemblées en au moins deux modules. Les fibres optiques sont organisées de façon telle qu'elles occupent la majeure partie de la cavité dans un axe mais qu'elles laissent un jeu important dans l'autre axe de la cavité. Le jeu laissé dans la cavité facilite l'accès aux fibres optiques.

Lors de l'installation de ce câble, il est possible d'accéder de façon continue, c'est-à-dire à n'importe quel endroit du câble, aux fibres optiques contenues dans la gaine.

L'opération de dérivation consiste alors à réaliser une première fenêtre d'accès dans la gaine de protection grâce à un outil tranchant, à l'endroit choisi pour la dérivation. Puis, une deuxième fenêtre d'accès est réalisée dans la gaine de protection, à une distance de la première fenêtre. Cette distance est choisie en fonction de la portion de module optique que l'on souhaite dériver, qui peut aller de quelques dizaines de centimètres à plusieurs mètres. Il suffit alors d'accéder au module optique choisi par la deuxième fenêtre, de le sectionner, puis de l'extraire par la première fenêtre. Après dérivation, il est possible de refermer les fenêtres par fixation de couvercles sur la gaine du câble.

Cette technique évite de réaliser un enlèvement de la gaine du câble sur une grande longueur, mais nécessite néanmoins de pouvoir accéder au câble à chacun des endroits préconisés pour réaliser les fenêtres.

Dans le cas d'un câble optique installé dans une conduite sous-terraine, les fenêtres peuvent être réalisées dans la portion de câble lovée dans une chambre d'accès.

Dans le cas d'un câble aérien ou installé en façade, cette technique peut nécessiter le déplacement d'un opérateur en nacelle pour se rendre d'une fenêtre à l'autre.

En outre, cette technique entraine des risques d'erreur lors de la sélection du module à couper. Ce risque est d'autant plus important lorsque la deuxième fenêtre est située en un lieu non visible par un opérateur localisé à proximité de la première fenêtre (par exemple à l'étage au-dessus dans un immeuble).

Enfin, cette technique requiert également l'utilisation d'accessoires pour refermer la deuxième fenêtre.

Le document US 2007/0263965 A1 décrit un outil pour couper une ou plusieurs fibres de distribution à l'intérieur d'un câble. L'outil comprend un corps allongé et un élément de coupe. Le corps allongé présente une première extrémité dans laquelle est pratiquée une ouverture dans laquelle coulisse l'élément de coupe et une deuxième extrémité faisant office de poignée. L'élément de coupe est formé d'un fil flexible destiné à être replié pour former une boucle autour d'une ou plusieurs fibres de distribution. L'instrument est introduit à l'intérieur du câble de distribution via une unique fenêtre et la ou les fibre(s) de distribution sont sectionnées en tirant sur les extrémités de l'élément de coupe.

L'outil décrit dans ce document est particulièrement adapté pour la fabrication de câbles pré-connectorisés en usine, qui nécessite d'extraire une ou plusieurs portions de fibres de faible longueur, typiquement de l'ordre de 2,5 à 7,5 centimètres.

Cependant, cet outil n'est pas adapté pour la réalisation sur site d'opérations de dérivation sur un câble déjà installé. Ces opérations requièrent de pouvoir extraire des portions de modules ou de fibres de longueurs importantes.

### PRESENTATION DE L'INVENTION

Un but de l'invention est de proposer un dispositif et un procédé pour extraire un ou plusieurs éléments optiques sur une grande longueur, pouvant aller de quelques dizaines de centimètres à plusieurs mètres.

A cet effet, l'invention consiste en un dispositif d'extraction d'un élément optique dans un câble optique du type incluant une gaine et au moins un élément optique s'étendant à l'intérieur de la gaine, le dispositif comprenant :
- un élément de guidage de forme allongée, comprenant un canal s'étendant selon une direction longitudinale de l'élément de guidage,
- un élément de transmission s'étendant à l'intérieur du canal et apte à coulisser dans le canal,
- un élément de coupe,
dans lequel l'élément de guidage est apte à être inséré à l'intérieur de la gaine le long de l'élément optique pour acheminer l'élément de coupe jusqu'à un point de coupe et l'élément de coupe étant apte à être actionné à distance via l'élément de transmission pour couper l'élément optique à l'endroit du point de coupe, et
dans lequel l'élément de coupe est apte à être déplacé via l'élément de transmission, entre une première position déployée dans laquelle l'élément de coupe forme une boucle ouverte apte à recevoir l'élément optique et à le retenir et une deuxième position rétractée dans laquelle l'élément de coupe pénètre dans le canal, la pénétration de l'élément de coupe dans le canal provoquant la coupe de l'élément optique retenu dans l'élément de coupe.

Du fait que l'élément de transmission s'étend à l'intérieur de l'élément de guidage, il est possible d'acheminer l'élément de coupe à l'intérieur du câble sur une distance importante.

Le dispositif peut en outre présenter les caractéristiques suivantes :
- l'élément de guidage présente une longueur d'au moins 0,6 mètres, de préférence d'au moins 1 mètre,
- l'élément de guidage comprend un tube flexible, incompressible longitudinalement,
- l'élément de guidage présente une déformation longitudinale inférieure à 1% lors de son utilisation,
- l'élément de guidage comprend un ressort métallique à spires jointives,
- l'élément de guidage comprend un tube en polyester,
- l'élément de guidage présente un diamètre compris entre 1 et 5 millimètres,
- l'élément de guidage comprend un embout agencé au niveau d'une extrémité d'introduction de l'élément de guidage et dans lequel l'élément de coupe coulisse,
- l'embout et l'élément de coupe coopèrent de manière à empêcher une rotation de l'élément de coupe par rapport à l'élément de guidage,
- l'embout présente une forme effilée pour faciliter l'insertion de l'élément de guidage à l'intérieur de la gaine,
- l'élément de transmission comprend un fil formé d'un ou plusieurs brin(s), s'étendant à l'intérieur du canal et apte à coulisser dans le canal,
- l'élément de coupe comprend un crochet,
- le crochet est formé par déformation du fil au niveau d'une extrémité du fil,
- le crochet est une pièce rapportée en extrémité du fil,
- l'élément de coupe comprend une arête de coupe adaptée pour sectionner l'élément optique à l'endroit du point de coupe,
- l'embout comprend une arête de coupe agencée en regard de l'arête de coupe de l'élément de coupe, l'actionnement de l'élément de coupe provoquant le cisaillement de l'élément optique entre les deux arêtes de coupe,
- l'embout comprend une échancrure pour éviter que l'élément optique à couper ne vienne s'engager dans l'embout lors de l'actionnement de l'élément de coupe,
- l'élément de coupe comprend une extrémité présentant une surface de glisse inclinée par rapport à la direction longitudinale de l'élément de guidage et agencée pour glisser sur des éléments optiques contenus dans la gaine du câble au voisinage de l'élément optique à couper,
- l'élément de coupe comprend deux surfaces de glisse agencées pour s'étendre de part et d'autre de l'élément optique à couper,
- l'élément de coupe comprend deux portions de guidage agencées pour s'étendre de part et d'autre de l'élément optique à couper afin de guider l'élément de guidage le long de l'élément optique lors de l'insertion de l'élément de guidage à l'intérieur de la gaine,
- le dispositif comprend un élément de butée adapté pour limiter la pénétration de l'élément de coupe dans le canal,
- l'élément de coupe est apte à être déplacé en une troisième position intermédiaire dans laquelle l'élément de coupe entoure l'élément optique pour guider l'élément de guidage le long de l'élément optique lors de l'insertion de l'élément de guidage à l'intérieur de la gaine,
- l'élément de guidage comprend une extrémité d'insertion et une extrémité de manipulation, le canal s'étendant entre l'extrémité d'insertion et l'extrémité de manipulation et l'élément de coupe étant agencé à proximité de l'extrémité d'insertion,
- le dispositif comprend un organe d'actionnement relié à l'élément de transmission à proximité de l'extrémité de manipulation de l'élément de guidage pour actionner à distance l'élément de coupe,
- l'organe d'actionnement comprend un premier élément fixe par rapport à l'élément de guidage et un deuxième élément mobile par rapport au premier élément, le deuxième élément étant relié à l'élément de transmission, le deuxième élément étant apte à être déplacé par rapport au premier élément pour provoquer l'actionnement de l'élément de coupe par l'intermédiaire de l'élément de transmission,
- le premier élément et le deuxième élément comprennent respectivement un premier filetage et un deuxième filetage aptes à coopérer entre eux de sorte qu'une rotation du deuxième élément entraine concomitamment une translation du deuxième élément par rapport au premier élément et provoque une translation de l'élément de transmission par rapport à l'élément de guidage,
- le dispositif comprend un troisième élément intermédiaire interposé entre le premier élément et le deuxième élément, et dans lequel un déplacement du deuxième élément provoque séquentiellement un déplacement du deuxième élément par rapport au troisième élément puis un déplacement du troisième élément par rapport au premier élément,
- le premier élément et le troisième élément comprennent des moyens de verrouillage agencés de sorte que le déplacement du deuxième élément par rapport au premier élément entraine une solidarisation du deuxième élément et du troisième élément et simultanément un déplacement de l'élément de coupe en une position intermédiaire dans laquelle l'élément optique est enfermé dans l'élément de coupe,
- le deuxième élément et le troisième élément comprennent des portions filetées aptes à coopérer entre elles de sorte qu'une rotation du troisième élément entraine concomitamment une translation du deuxième élément par rapport au premier élément et simultanément un déplacement de l'élément de coupe en une position rétractée pour couper l'élément optique,
- le deuxième élément mobile comprend un bras présentant une première extrémité au niveau de laquelle le bras est monté rotatif par rapport au premier élément et une deuxième extrémité reliée à l'élément de transmission, de sorte que la rotation du bras par rapport au premier élément entraine par effet de levier une translation de l'élément de transmission par rapport à l'élément de guidage,
- le deuxième élément comprend en outre une poignée permettant à un opérateur d'actionner le bras,
- l'organe d'actionnement comprend en outre une butée pour stopper le mouvement du deuxième élément par rapport au premier élément une fois que l'élément optique a été coupé,
- l'organe d'actionnement comprend en outre des moyens de repérage signalant une ou plusieurs positions de l'élément de coupe.

L'invention consiste également en un procédé d'extraction d'un élément optique dans un câble optique, le câble optique incluant une gaine et au moins un élément optique s'étendant à l'intérieur de la gaine, à l'aide d'un dispositif tel que défini précédemment, le procédé comprenant des étapes de :
- ouvrir une fenêtre dans la gaine du câble,
- insérer l'élément de guidage à l'intérieur de la gaine le long de l'élément optique pour acheminer l'élément de coupe jusqu'à un site de coupe,
- actionner à distance l'élément de coupe via l'élément de transmission pour provoquer la coupe de l'élément optique à l'endroit du site de coupe.

### PRESENTATION DES DESSINS

D'autres caractéristiques et avantages ressortiront encore de la description qui suit, laquelle est purement illustrative et non limitative, et doit être lue en regard des figures annexées parmi lesquelles :
- les figures 1A et 1B représentent de manière schématique un dispositif d'extraction conforme à un premier mode de réalisation de l'invention,
- la figure 2 représente de manière schématique un élément de coupe,
- les figures 3 à 7 représentent de manière schématique des étapes d'un procédé d'extraction d'un élément optique conforme à mode de réalisation de l'invention,
- les figures 8 à 10 représentent de manière schématique trois positions d'un élément de coupe,
- la figure 11 représente de manière schématique un premier exemple d'organe d'actionnement du dispositif d'extraction,
- la figure 12 représente de manière schématique un deuxième exemple d'organe d'actionnement du dispositif d'extraction,
- les figures 13A à 13E représentent de manière schématique un dispositif d'extraction conforme à un deuxième mode de réalisation de l'invention,
- la figure 14 représente de manière schématique, en coupe longitudinale, un troisième exemple d'organe d'actionnement du dispositif d'extraction,
- les figures 15 à 17 représentent de manière schématique trois positions de l'organe d'actionnement de la figure 14.

### DESCRIPTION DETAILLEE D'UN MODE DE REALISATION

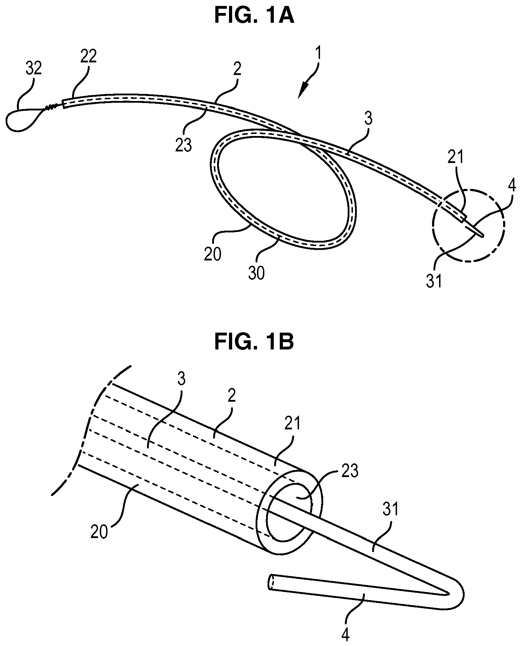

Les figures 1A et 1B représentent de manière schématique un dispositif d'extraction 1 conforme à un premier mode de réalisation de l'invention. Le dispositif d'extraction 1 comprend principalement un élément de guidage 2, un élément de transmission 3 et un élément de coupe 4.

L'élément de guidage 2 est formé d'un tube flexible 20, de forme cylindrique de révolution. Le tube 20 comprend une première extrémité 21 d'insertion, une deuxième extrémité 22 de manipulation et un canal interne 23 s'étendant entre les extrémités 21 et 22 selon une direction longitudinale du tube. Le tube 20 présente une longueur d'environ 1,5 mètres et un diamètre d'environ 2,5 millimètres. Il peut être formé d'un ressort métallique à spires jointives ou d'un tube en polyester, de sorte que le tube est flexible tout en étant incompressible longitudinalement.

Le terme « incompressible » signifie que l'élément de guidage présente une déformation longitudinale inférieure à 1% lors de son utilisation.

L'élément de transmission 3 comprend un fil 30 s'étendant à l'intérieur du canal 23 et apte à coulisser dans le canal 23. Le fil 30 présente une première extrémité 31 destinée à être reliée à l'élément de coupe 4 et une deuxième extrémité 32 destinée à être reliée à un organe d'actionnement. Le fil 30 est un fil rigide, de préférence en métal, par exemple en acier, et peut être formé d'un brin ou de plusieurs brin(s) torsadés. Il présente typiquement un diamètre d'environ 0,5 millimètres.

L'élément de coupe 4 comprend un crochet 40. Comme cela est visible sur la figure 1B, le crochet est formé par déformation du fil au niveau de l'extrémité libre 31 du fil, à proximité de l'extrémité 21 du tube. Plus précisément, sur la figure 1B, le fil est plié pour former le crochet.

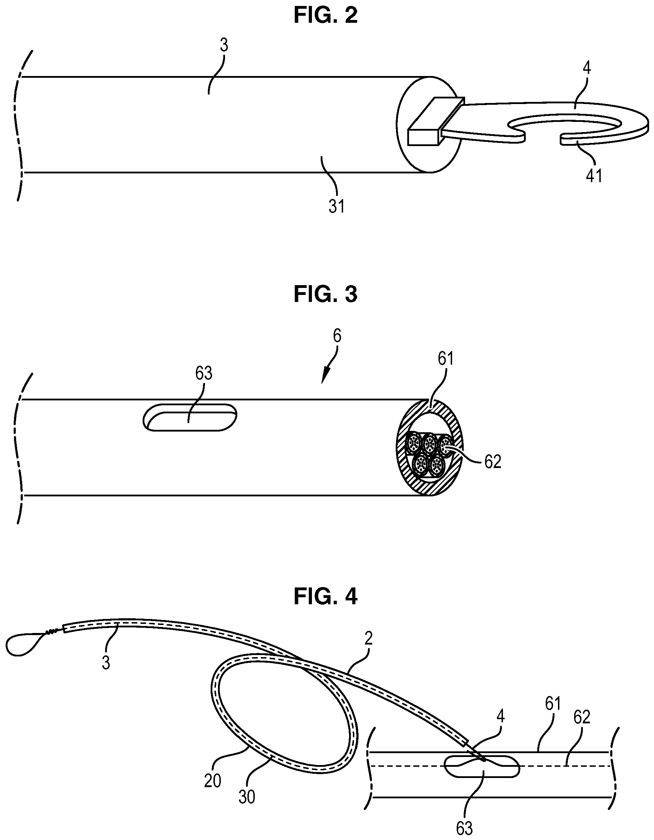

La figure 2 représente de manière schématique une variante de réalisation de l'élément de coupe 4. Dans cette variante, l'élément de coupe 4 comprend un crochet 41 sous la forme d'une pièce taillée (ou usinée) et rapportée en extrémité du fil.

Les figures 3 à 7 représentent de manière schématique des étapes d'un procédé d'extraction d'un élément optique dans un câble optique.

Sur la figure 3, le câble optique 6 représenté comprend une gaine 61 et une pluralité d'éléments optiques 62 s'étendant à l'intérieur de la gaine 61. Chaque élément optique 62 comprend une enveloppe renfermant au moins une fibre optique.

Selon une première étape (figure 3), un opérateur réalise une ouverture 63 dans la gaine 61, à l'endroit où il souhaite réaliser une dérivation.

Selon une deuxième étape (figure 4), l'opérateur sélectionne un élément optique 62 qu'il souhaite dériver et introduit l'élément optique 62 sélectionné dans le crochet 4.

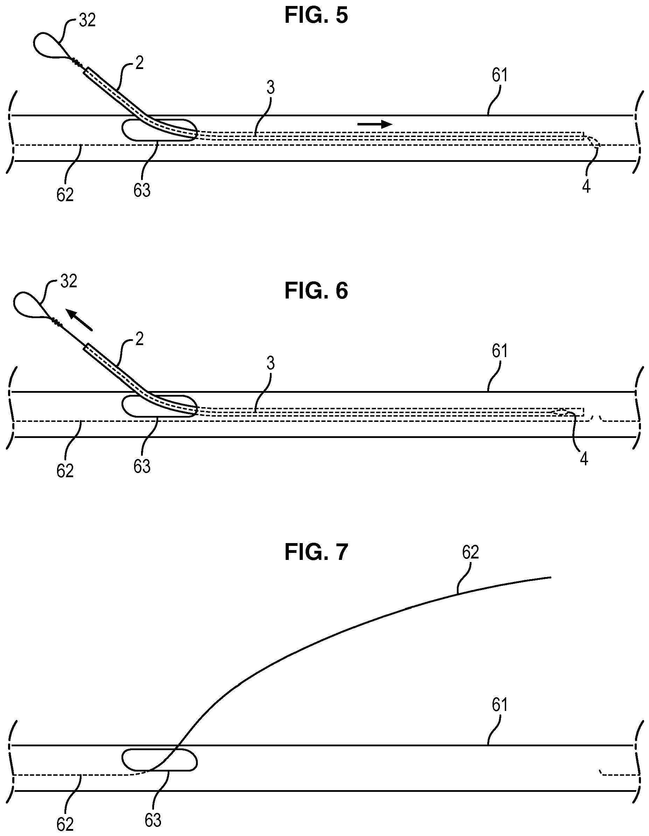

Selon une troisième étape (figure 5), l'opérateur insère l'élément de guidage 2 à l'intérieur de la gaine 61 via l'ouverture 63. L'opérateur pousse l'élément de guidage 2 le long de l'élément optique 62 sélectionné jusqu'à ce que la première extrémité 21 de l'élément de guidage 2 se trouve à l'endroit d'un point de coupe désiré.

Durant l'introduction de l'élément de guidage 2 à l'intérieur de la gaine 61, le crochet 4 coulisse le long de l'élément optique 62. L'élément de guidage 2 est ainsi guidé à l'intérieur de la gaine 61 du câble par l'élément optique 62.

Selon une quatrième étape (figure 6), l'opérateur tire sur la deuxième extrémité 32 du fil 3, ce qui a pour effet de faire coulisser le fil 3 à l'intérieur du canal 23 et par conséquent de faire pénétrer le crochet 4 à l'intérieur du tube 3. En pénétrant à l'intérieur du tube 3, le crochet 4 rompt l'élément optique 62 à l'endroit du point de coupe.

Le tube 3 peut ensuite être retiré du câble 6 par l'ouverture 63.

Selon une cinquième étape (figure 7), l'opérateur extrait une portion sectionnée de l'élément optique 62 par l'ouverture 63. La portion d'élément optique 62 extraite peut ensuite être utilisée pour réaliser une dérivation.

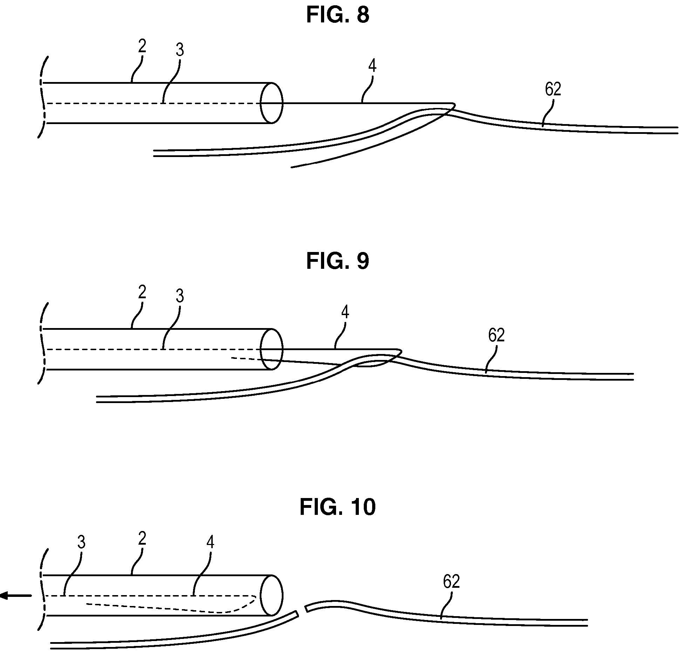

Les figures 8 à 10 représentent de manière schématique trois positions de l'élément de coupe 4.

Sur la figure 8, l'élément de coupe 4 est représenté dans une position déployée (première position). Dans cette position, l'élément de coupe s'étend à l'extérieur de l'élément de guidage. L'élément de coupe forme une boucle ouverte, apte à recevoir l'élément optique 62.

Sur la figure 9, l'élément de coupe est représenté dans une position intermédiaire (troisième position). Dans cette position, l'élément de coupe s'étend en partie à l'intérieur de l'élément de guidage. Plus précisément, l'extrémité libre de l'élément de coupe est insérée à l'intérieur du canal de sorte que l'élément de coupe forme une boucle fermée, qui entoure l'élément optique 62.

Lorsque l'élément de coupe 4 est dans la position intermédiaire, l'élément de coupe 4 entoure l'élément optique 62, ce qui permet de guider l'élément de guidage 2 le long de l'élément optique 62 lors de l'insertion de l'élément de guidage 4 à l'intérieur de la gaine 61 (troisième étape - figure 5).

Sur la figure 10, l'élément de coupe est représenté dans une position rétractée (deuxième position). Dans cette position, l'élément de coupe est totalement rentré à l'intérieur du canal.

La pénétration de l'élément de coupe 4 dans le canal 23 provoque la coupe de l'élément optique 62 retenu dans l'élément de coupe 4.

Lorsque l'opérateur actionne l'élément de coupe 4, en tirant sur l'élément de transmission 3, l'élément de coupe 4 passe successivement de la position déployée (figure 8), à la position intermédiaire (figure 9) puis à la position rétractée (figure 10).

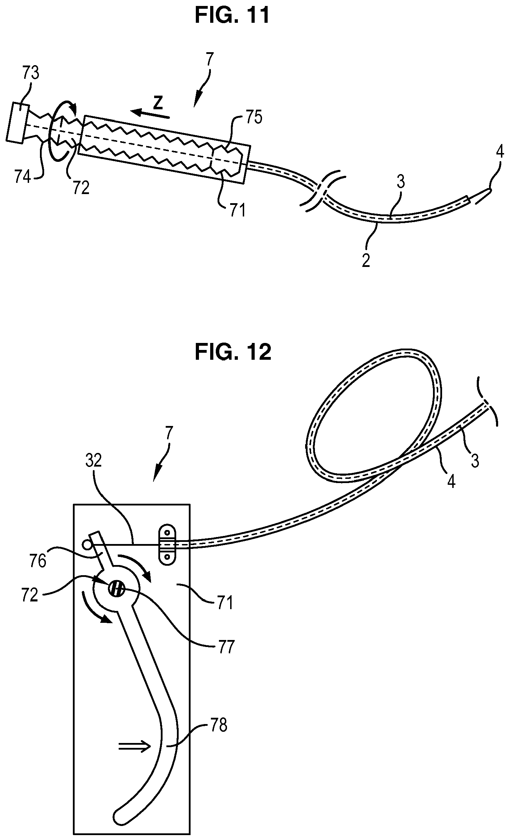

La figure 11 représente de manière schématique un organe d'actionnement 7 du dispositif d'extraction conforme à un premier exemple.

L'organe d'actionnement 7 est agencé à proximité de la deuxième extrémité 22 de manipulation de l'élément de guidage 2. L'organe d'actionnement 7 permet d'actionner à distance et de manière contrôlée l'élément de coupe 4 se trouvant à proximité de la première extrémité 21 d'insertion de l'élément de guidage 2.

L'organe d'actionnement 7 comprend un premier élément 71 fixe par rapport à l'élément de guidage 2 et un deuxième élément 72 mobile par rapport au premier élément 71.

Le premier élément 71 est fixé à l'élément de guidage 2 au niveau de la deuxième extrémité 22 de l'élément de guidage 2. Le deuxième élément 72 est relié à la deuxième extrémité 32 de l'élément de transmission 3.

Le premier élément 71 comprend une poignée 73 et une tige filetée 74.

Le deuxième élément 72 comprend un orifice taraudé 75. La tige fileté 74 est insérée dans l'orifice taraudé 75 et coopère avec celui-ci de sorte qu'une rotation du deuxième élément 72 entraine concomitamment une translation du deuxième élément 72 par rapport au premier élément 71. Lorsque l'opérateur saisit la poignée 73 et fait tourner le premier élément 71 dans le deuxième élément, cela provoque une translation de l'élément de transmission 3 par rapport à l'élément de guidage 4.

La figure 12 représente de manière schématique un organe d'actionnement 7 du dispositif d'extraction conforme à un deuxième exemple.

L'organe d'actionnement 7 comprend un premier élément 71 sous la forme d'un support fixe par rapport à l'élément de guidage 2 et un deuxième élément 72 mobile par rapport au premier élément 71.

Le deuxième élément 72 comprend un bras 76 présentant une première extrémité au niveau de laquelle le bras est monté rotatif par rapport au premier élément 71 par l'intermédiaire d'un pivot 77 et une deuxième extrémité reliée à la deuxième extrémité 32 de l'élément de transmission 3. Le deuxième élément 72 comprend en outre une poignée 78 permettant à l'opérateur de faire tourner le bras 76.

La rotation du bras 76 par rapport au support 71 entraine par effet de levier une translation de l'élément de transmission 3 par rapport à l'élément de guidage 2.

Dans chacun des exemples qui viennent d'être décrits, l'organe d'actionnement 7 peut comprendre une butée pour stopper le mouvement du deuxième élément 72 par rapport au premier élément 71 une fois que l'élément de coupe 4 a été rétracté.

De plus, l'organe d'actionnement peut comprendre des moyens de repérage signalant à l'opérateur différentes positions de l'élément de coupe 4 : une position déployée (figure 8), une position intermédiaire (figure 9) et une position rétractée (figure 10). Les moyens de repérage peuvent par exemple consister en une graduation apparaissant sur l'élément fixe 71 ou sur l'élément mobile 72. Cela permet à l'opérateur de contrôler avec précision l'actionnement de l'élément de coupe 4, alors que l'élément de coupe 4 n'est pas visible pour l'opérateur du fait qu'il se trouve à l'intérieur du câble 6.

Le dispositif qui vient d'être décrit présente plusieurs avantages :
Du fait que l'élément de transmission 3 s'étend à l'intérieur de l'élément de guidage 4, le dispositif d'extraction 1 peut être inséré dans une gaine du câble sur une grande longueur. En effet, d'une part, l'élément de transmission ne gêne pas l'insertion de l'élément de guidage dans le câble, et d'autre part, le coulissement de l'élément de transmission par rapport à l'élément de guidage se trouve facilité.

Avec un tel dispositif, il est possible d'extraire une portion d'élément optique de longueur importante (comprise entre quelques dizaines de centimètres à plusieurs mètres) à partir d'une ouverture (ou fenêtre) unique.

Il n'est par conséquent plus nécessaire de prévoir des surlongueurs de câbles optiques pour lover des portions de câble dans des chambres d'accès sous-terraines ou des boîtiers d'accès aériens.

Enfin, le procédé d'extraction proposé fiabilise l'opération de coupe de l'élément optique du fait que l'élément de coupe 4 est acheminé le long de l'élément optique sélectionné à partir de l'endroit de dérivation jusqu'à l'endroit du point de coupe. L'opérateur est donc assuré que l'élément optique coupé est bien l'élément optique qu'il a sélectionné.

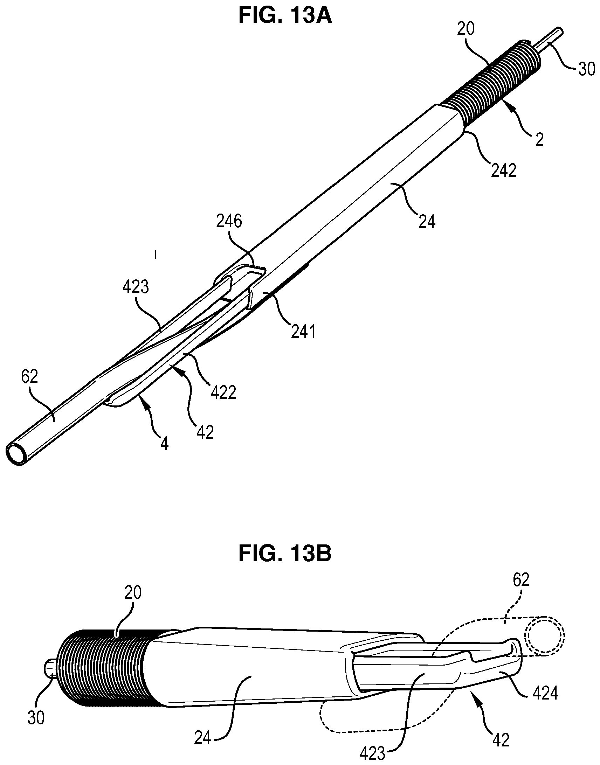

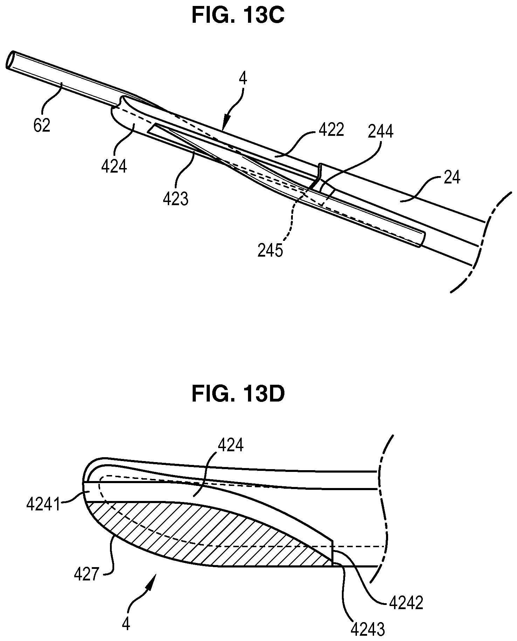

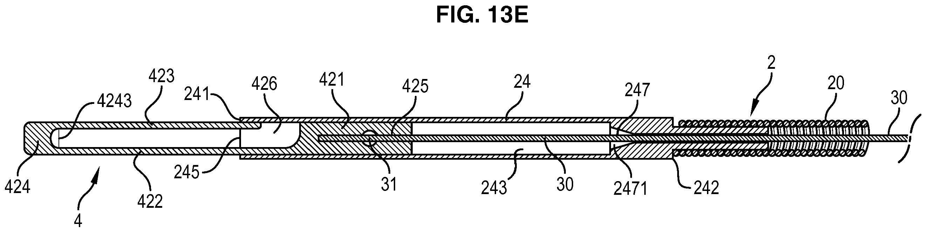

Les figures 13A à 13E représentent de manière schématique un dispositif d'extraction 1 conforme à un deuxième mode de réalisation de l'invention.

Dans ce deuxième mode de réalisation, l'élément de guidage 2 comprend un embout 24 fixé sur le tube flexible 20 au niveau de l'extrémité d'insertion 21, par exemple par montage en force de l'embout 24 dans le tube flexible 20.

L'embout 24 comprend une première extrémité d'insertion 241 et une deuxième extrémité de fixation 242 et un canal interne 243 destiné à recevoir l'élément de coupe 4.

L'embout 24 présente une forme générale aplatie qui s'effile vers l'extrémité d'insertion 241, afin de faciliter l'insertion de l'élément de guidage 2 à l'intérieur de la gaine du câble.

De plus, l'embout 24 présente au niveau de son extrémité d'insertion 241 une rampe 244 permettant d'éviter que l'embout 24 ne vienne accrocher la gaine du câble au moment de l'insertion de l'élément de guidage 2 à l'intérieur de la gaine.

L'élément de coupe 4 comprend un crochet 42 fixé à une première extrémité 31 du fil 30 et adapté pour coulisser dans l'embout 24.

L'embout 24 et l'élément de coupe 4 coopèrent de manière à empêcher une rotation de l'élément de coupe 4 par rapport à l'élément de guidage 2. Plus précisément, le canal interne 243 de l'embout 24 présente une section transversale de forme rectangulaire, et l'élément de coupe 4 présente une forme complémentaire apte épouser la forme du canal 243, de sorte que toute rotation relative de l'élément de coupe 4 par rapport à l'embout 24 est empêchée. Cet agencement évite que le fil 30 ne se torde à l'intérieur de l'élément de guidage 2 lors de l'insertion de l'élément de guidage 2 dans la gaine du câble.

Le crochet 42 comprend une portion coulissante 421 adaptée pour coulisser dans l'embout 24, deux portions de guidage 422 et 423 agencées pour s'étendre de part et d'autre de l'élément optique 62 à couper, et une lame 424 s'étendant entre les portions de guidage 422 et 423.

La portion coulissante 421 est dotée d'un orifice longitudinal 425 permettant l'insertion de l'extrémité 31 du fil 30 dans la portion coulissante 421 pour relier le fil 30 au crochet 42. La portion coulissante 421 est également dotée d'un orifice transversal débouchant dans l'orifice longitudinal 425. Cet orifice transversal est adapté pour être rempli avec de la colle afin de renforcer la fixation du fil 30 sur le crochet 42 si nécessaire.

L'une des portions de guidage 422 est reliée à la portion coulissante 421, tandis que l'autre portion de guidage 423 est interrompue de manière à ménager un espace 426 permettant l'introduction de l'élément optique 62 dans le crochet 42 entre les deux portions de guidage 422 et 423.

L'élément de coupe 4 présente une extrémité en forme de « luge » ou de « berceau » facilitant l'insertion de l'élément de coupe 4 parmi les éléments optiques présents dans la gaine du câble et l'acheminement de l'élément de coupe 4 le long de l'élément optique à couper.

En particulier, l'élément de coupe 4 présente une extrémité d'insertion arrondie. De plus, chaque portion de guidage 422 et 423 comprend une surface courbe 427 de forme concave adaptée pour glisser comme un patin sur des éléments optiques contenus dans la gaine du câble au voisinage de l'élément optique à couper.

La lame 424 s'étend entre les deux portions de guidage 422 et 423, transversalement à la direction longitudinale de l'élément de guidage.

La lame 424 présente un bord d'introduction 4241 (ou bord avant) et un bord de coupe 4242 (ou bord arrière). La lame 242 présente une forme arrondie de sorte qu'au niveau du bord d'insertion 4241, la lame s'étend selon un plan sensiblement parallèle à la direction longitudinale de l'élément de guidage 2, tandis qu'au niveau du bord de coupe 4242, la lame s'étend selon un plan incliné par rapport à la direction longitudinale de l'élément de guidage 2. Le bord de coupe 4242 présente une arête de coupe 4243 s'étendant transversalement à la direction longitudinale de l'élément de guidage.

Une fois introduit dans le crochet 42, l'élément optique à couper 62 s'étend sur la lame 424, entre les deux portions de guidage 422 et 423. La configuration de la lame 424 permet de faire coulisser l'élément optique à couper 62 sur la lame à mesure de l'avancement de l'élément de guidage dans la gaine du câble, sans endommager l'élément optique. En particulier, la forme courbée de la lame 424 permet de limiter la courbure imposée à l'élément optique.

Par ailleurs, l'embout 24 comprend une arête de coupe 245 agencée en regard de l'arête de coupe 4243 de l'élément de coupe 4 de sorte que l'actionnement de l'élément de coupe 4 provoque le cisaillement de l'élément optique 62 entre les deux arêtes de coupes 245 et 4243, ce qui entraine une rupture nette de l'élément optique 62 entre les deux arêtes de coupe 245 et 4243.

L'arête de coupe 4243 de la lame 424 est chanfreinée de manière à rendre l'arête de coupe 4243 peu sensible à l'usure, ce qui permet de réaliser des coupes de manière reproductible.

L'embout 24 comprend une échancrure 246 en regard de l'arête de coupe 245 pour éviter que l'élément optique coupé ne soit entrainé par l'élément de coupe 4 à l'intérieur de l'embout 24 lors de l'actionnement de l'élément de coupe 4.

L'embout 24 comprend également une butée 247 apte à limiter le mouvement de la portion coulissante 421 à l'intérieur du canal 243. La butée 247 permet d'une part de limiter la pénétration de l'élément de coupe 4 dans l'élément de guidage 2 et d'autre part de signaler à l'opérateur qui actionne le dispositif de coupe 1 que l'élément optique a été coupé.

La butée 247 présente une forme « d'entonnoir ». Autrement dit, la butée 247 comprend un canal 2471 présentant une forme évasée qui rétrécit lorsque l'on s'éloigne de l'extrémité d'insertion 241 de l'embout 24. Le canal 2471 reçoit le fil 30 qui coulisse à l'intérieur du canal 2471. La forme évasée du canal 2471 favorise l'insertion du fil 30 à l'intérieur de l'embout 24 lors du remplacement de l'élément de coupe 4.

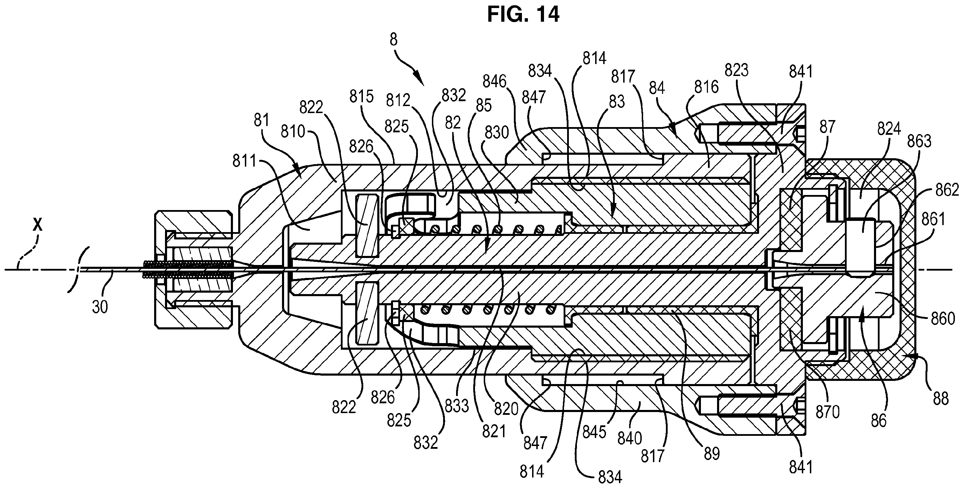

La figure 14 représente de manière schématique un organe d'actionnement 8 du dispositif d'extraction conforme à un troisième exemple.

Dans ce troisième exemple, l'organe d'actionnement 8 comprend un premier élément 81 (ou élément fixe), un deuxième élément 82 (ou élément mobile), un troisième élément 83 (ou élément intermédiaire) agencé entre le premier élément 81 et le deuxième élément 82 et un quatrième élément 84 (ou poignée).

L'élément fixe 81 comprend un corps cylindrique creux 810 présentant un alésage 811 longitudinal adapté pour recevoir les deuxième et troisième éléments 82 et 83. Le corps cylindrique creux 810 présente une surface interne 812 comprenant une portion taraudée 814 destinée à coopérer avec une portion filetée complémentaire de l'élément intermédiaire 83. L'élément fixe 81 présente également une surface externe 815 comprenant une portion annulaire élargie 816 formant un décrochement 817 jouant le rôle d'une butée pour limiter une translation de la poignée 84.

L'élément mobile 82 comprend une tige cylindrique 820 présentant un alésage longitudinal 821 apte à recevoir le fil 30, une paire de pions 822 s'étendant radialement par rapport à la tige cylindrique 820 et une collerette 823 permettant de fixer l'élément mobile 82 à la poignée 84.

L'élément mobile 82 comprend en outre une rondelle 825 s'étendant radialement autour du corps 820 cylindrique, la rondelle 825 étant adaptée pour recevoir en appui un ressort hélicoïdal, et un anneau élastique 826 (circlips) reçu dans une gorge du corps 820 cylindrique, l'anneau élastique 826 permettant de bloquer la rondelle 825 en position fixe par rapport au corps 820 malgré l'effort exercé par le ressort.

L'élément intermédiaire 83 comprend un corps cylindrique creux 830. Le corps 830 comprend une paire de gorges 832 adaptées pour recevoir les pions 822 de l'élément mobile 82. Les gorges 832 présentent une forme coudée de manière à former avec les pions 822 un accouplement de type baïonnette. L'élément intermédiaire 83 présente une surface cylindrique externe 833 comprenant une portion filetée 834 coopérant la portion taraudée 814 de l'élément fixe 81.

L'organe d'actionnement 8 comprend un palier 89 interposé entre l'élément mobile 82 et l'élément intermédiaire 83 et autorisant une rotation et un coulissement de l'élément mobile 82 par rapport à l'élément intermédiaire. Le palier 89 est solidaire en translation de l'élément intermédiaire 83 grâce à une portion annulaire du pallier 89 venant en appui contre une surface radiale de l'élément intermédiaire 83.

La poignée 84 comprend un manchon cylindrique 840 s'étendant autour du corps cylindrique 810. La poignée 84 est monté solidaire de l'élément mobile 82 par l'intermédiaire de vis 841 permettant de fixer le manchon 840 la sur collerette 823. Le manchon cylindrique 840 présente une surface interne 845 comprenant une portion annulaire rétrécie 846 formant un décrochement 847 s'étendant en regard du décrochement 817 et adapté pour venir en contact avec le décrochement 817 pour limiter une translation de la poignée 84.

L'organe d'actionnement 8 comprend également un ressort hélicoïdal 85 agencé autour de la tige 820. Le ressort hélicoïdal 85 s'étend entre la tige 820 de l'élément mobile 82 et le corps 830 de l'élément intermédiaire 83. Plus précisément, le ressort hélicoïdal 85 a une extrémité en appui sur le palier 89 et une autre extrémité en appui sur la rondelle 825.

L'organe d'actionnement 8 comprend également une pièce de fixation 86 permettant de bloquer le fil 30 dans l'organe d'actionnement 8. La pièce de fixation 86 comprend un corps 860 adapté pour être reçu dans un logement 824 de l'élément mobile 82. Le corps 860 comprend un alésage longitudinal 861 pour recevoir le fil 30 et un alésage radial 862 débouchant dans l'alésage longitudinal 861. La pièce de fixation 86 comprend en outre une vis sans tête 863 adaptée pour être vissée dans l'alésage radial 862 afin de bloquer le fil 30 dans le corps 860.

L'organe d'actionnement 8 comprend par ailleurs un élément de découplage 87 interposé entre l'élément mobile 82 et la pièce de fixation 86. L'élément de découplage comprend une rondelle 870 en matériau présentant un faible coefficient de friction, tel que du PTFE (polytétrafluoroéthylène). L'élément de découplage 87 évite de transmettre un mouvement de rotation de l'élément mobile 82 à la pièce de fixation 86. Cela permet de ne pas vriller le fil 30.

Enfin, l'organe d'actionnement 8 comprend un capot 88 venant se fixer de manière amovible sur l'élément mobile 82 de manière à recouvrir la pièce de fixation 86.

L'organe d'actionnement fonctionne de la manière suivante.

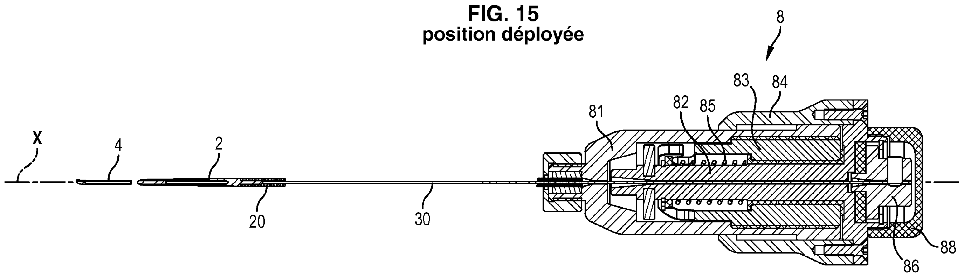

L'organe d'actionnement est initialement dans une position telle que représentée sur la figure 15. Dans cette position de l'organe d'actionnement 8, l'élément de coupe 4 du dispositif d'extraction se trouve en position déployée (première position représentée sur la figure 8). L'élément de coupe 4 s'étend à l'extérieur de l'élément de guidage 2. L'élément de coupe 4 forme une boucle ouverte, apte à recevoir l'élément optique 62 à couper.

Une fois l'élément optique 62 introduit dans l'élément de coupe 4, l'opérateur saisit l'organe d'actionnement 8 en posant une main sur l'élément fixe 81 et l'autre main sur la poignée 84. Dans un premier temps, l'opérateur tire sur la poignée 84 puis fait tourner la poignée 84 d'un quart de tour par rapport à l'élément fixe 81.

Cela a pour effet que l'élément mobile 82 se translate par rapport à l'élément fixe 81 selon l'axe longitudinal X, puis l'élément mobile 82 pivote par rapport à l'élément fixe 81 autour de l'axe longitudinal. La translation de l'élément mobile 82 entraine simultanément une translation du fil 30 à l'intérieur du tube flexible 20 et par voie de conséquence la rétraction l'élément de coupe 4 dans une position intermédiaire (troisième position représentée sur la figure 9).

La translation de l'élément mobile 82 par rapport à l'élément fixe 81 a pour effet de comprimer le ressort hélicoïdal 85, puis la rotation de l'élément mobile 82 par rapport à l'élément fixe 81 a pour effet de venir engager les pions 822 dans les parties coudées des gorges 832.

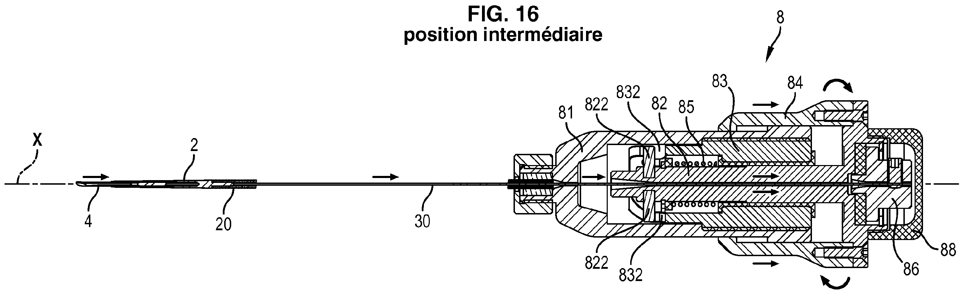

Dans cette position représentée sur la figure 16, le ressort hélicoïdal 85 exerce une force de rappel qui tend à maintenir les pions 822 engagés dans la parties coudées des gorges 832, de sorte que la partie mobile 82 se trouve verrouillée par rapport à la partie intermédiaire 83.

L'engagement des pions 822 dans les gorges 832 permet à l'opérateur de passer rapidement de la position déployée à la position intermédiaire tout en contrôlant le déplacement de l'élément de coupe 4 avec précision. En particulier, l'accouplement de type baïonnette permet à l'opérateur de sentir le moment où l'élément de coupe 4 est dans la position intermédiaire et évite une coupe non intentionnelle de l'élément optique 63.

L'opérateur peut ensuite insérer l'élément de guidage 2 du dispositif à l'intérieur de la gaine du câble pour acheminer l'élément de coupe 4 jusqu'à un point de coupe comme cela a été décrit précédemment en référence aux figures 4 à 7.

Une fois l'élément de coupe 4 acheminé au point de coupe, dans un deuxième temps, l'opérateur tourne la poignée 84 par rapport à l'élément fixe 81 autour de l'axe longitudinal X. La rotation de la poignée 84 provoque la rotation de l'ensemble formé par l'élément mobile 82 et de la pièce intermédiaire 83 par rapport à l'élément fixe 81.

Du fait de la coopération entre la portion taraudée 814 de l'élément fixe 81 et la portion filetée 834 de l'élément intermédiaire 83, la rotation de l'ensemble formé par l'élément mobile 82 et de la pièce intermédiaire 83 entraine également une translation de cet ensemble par rapport à l'élément fixe 81 selon l'axe longitudinal X.

La translation de l'élément mobile 82 entraine une translation du fil 30 à l'intérieur du tube flexible 20 et par voie de conséquence la rétraction l'élément de coupe 4 à l'intérieur de l'élément de guidage 2 (deuxième position représentée sur la figure 10). La rétraction de l'élément de coupe 4 provoque la rupture du module optique. A l'instant où se produit la rupture, l'opérateur sent un déclic dans l'organe d'actionnement.

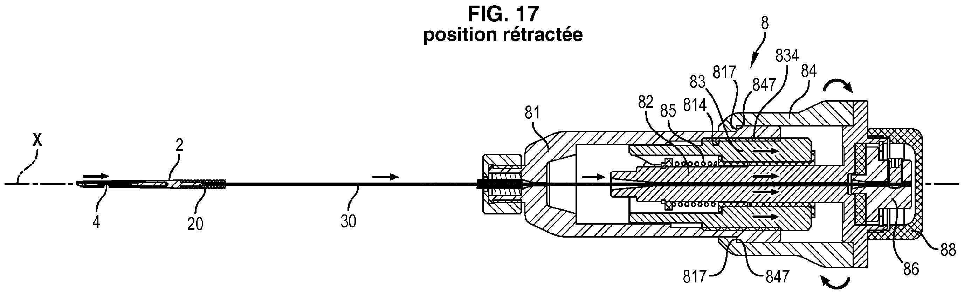

La translation de l'élément mobile 82 et de l'élément intermédiaire 83 par rapport à l'élément fixe 81 est stoppée par les surfaces 817 et 847 venant en butée l'une contre l'autre. Cette position de l'organe d'actionnement 8 est représentée sur la figure 17. La mise en contact des surfaces 817 et 847 permet à l'opérateur de détecter le moment où l'élément de coupe 4 est totalement rétracté à l'intérieur de l'élément de guidage 2.

## Revendications

1. Dispositif (1) d'extraction d'un élément optique (62) dans un câble optique (6) du type incluant une gaine (61) et au moins un élément optique (62) s'étendant à l'intérieur de la gaine, le dispositif comprenant :
- un élément (2) de guidage de forme allongée, comprenant un canal (23) s'étendant selon une direction longitudinale de l'élément de guidage,
- un élément (3) de transmission s'étendant à l'intérieur du canal (23) et apte à coulisser dans le canal (23),
- un élément (4) de coupe,
dans lequel l'élément (2) de guidage est apte à être inséré à l'intérieur de la gaine (61) le long de l'élément optique (62) pour acheminer l'élément (4) de coupe jusqu'à un point de coupe et l'élément (4) de coupe étant apte à être actionné à distance via l'élément (3) de transmission pour couper l'élément optique (62) à l'endroit du point de coupe, et
dans lequel l'élément (4) de coupe est apte à être déplacé via l'élément (3) de transmission, entre une première position déployée dans laquelle l'élément (4) de coupe forme une boucle ouverte apte à recevoir l'élément optique (62) et à le retenir et une deuxième position rétractée dans laquelle l'élément (4) de coupe pénètre dans le canal (23), la pénétration de l'élément (4) de coupe dans le canal (23) provoquant la coupe de l'élément optique (62) retenu dans l'élément (4) de coupe.

2. Dispositif selon la revendication 1, dans lequel l'élément (2) de guidage présente une longueur d'au moins 0,6 mètres, de préférence d'au moins 1 mètre.

3. Dispositif selon l'une des revendications 1 ou 2, dans lequel l'élément de guidage (2) comprend un embout (24) agencé au niveau d'une extrémité d'introduction (21) de l'élément de guidage (2) et dans lequel l'élément de coupe (4) coulisse, et dans lequel l'embout (24) et l'élément de coupe (4) coopèrent de manière à empêcher une rotation de l'élément de coupe (4) par rapport à l'élément de guidage (2).

4. Dispositif selon la revendication 3, dans lequel l'embout (24) présente une forme effilée pour faciliter l'insertion de l'élément de guidage (2) à l'intérieur de la gaine (61).

5. Dispositif selon l'une des revendications qui précèdent, dans lequel l'élément (4) de coupe comprend un crochet.

6. Dispositif selon l'une des revendications qui précèdent, dans lequel l'élément de coupe (4) comprend une arête de coupe (4243) adaptée pour sectionner l'élément optique (62) à l'endroit du point de coupe.

7. Dispositif selon les revendications 3 et 6, dans lequel l'embout (24) comprend une arête de coupe (245) agencée en regard de l'arête de coupe (4243) de l'élément de coupe (4), l'actionnement de l'élément de coupe (4) provoquant le cisaillement de l'élément optique (62) entre les deux arêtes de coupes (245, 4243).

8. Dispositif selon la revendication 7, dans lequel l'embout (24) comprend une échancrure (246) pour éviter que l'élément optique (62) à couper ne vienne s'engager dans l'embout (24) lors de l'actionnement de l'élément de coupe (4).

9. Dispositif selon l'une des revendications qui précèdent, dans lequel l'élément de coupe (4) comprend une extrémité présentant une surface de glisse (427) inclinée par rapport à la direction longitudinale de l'élément de guidage (2) et agencée pour glisser sur des éléments optiques contenus dans la gaine du câble au voisinage de l'élément optique à couper.

10. Dispositif selon l'une des revendications qui précèdent, dans lequel l'élément de coupe (4) comprend deux portions de guidage (422, 423) agencées pour s'étendre de part et d'autre de l'élément optique à couper (62) afin de guider l'élément (3) de guidage le long de l'élément optique (62) lors de l'insertion de l'élément de guidage (2) à l'intérieur de la gaine (61).

11. Dispositif selon l'une des revendications qui précèdent, dans lequel l'élément (4) de coupe est apte à être déplacé en une troisième position intermédiaire dans laquelle l'élément (4) de coupe forme une boucle fermée entourant l'élément optique (62) pour guider l'élément (3) de guidage le long de l'élément optique (62) lors de l'insertion de l'élément de guidage à l'intérieur de la gaine (61).

12. Dispositif selon l'une des revendications précédentes, dans lequel l'élément (2) de guidage comprend une extrémité (21) d'insertion et une extrémité (22) de manipulation, le canal (23) s'étendant entre l'extrémité (21) d'insertion et l'extrémité (22) de manipulation et l'élément (4) de coupe étant agencé à proximité de l'extrémité (21) d'insertion, le dispositif comprenant en outre un organe (7, 8) d'actionnement relié à l'élément (3) de transmission à proximité de l'extrémité (22) de manipulation de l'élément (2) de guidage pour actionner à distance l'élément (4) de coupe.

13. Dispositif selon la revendication 12, dans lequel l'organe (7, 8) d'actionnement comprend un premier élément (71, 81) fixe par rapport à l'élément (2) de guidage et un deuxième élément (72, 82) mobile par rapport au premier élément (71, 81), le deuxième élément (72, 82) étant relié à l'élément (3) de transmission, le deuxième élément (72, 82) étant apte à être déplacé par rapport au premier élément (71, 81) pour provoquer l'actionnement de l'élément (4) de coupe par l'intermédiaire de l'élément (3) de transmission.

14. Dispositif selon la revendication 13, comprenant un troisième élément (83) intermédiaire interposé entre le premier élément (81) et le deuxième élément (82), et dans lequel un déplacement du deuxième élément (82) provoque séquentiellement un déplacement du deuxième élément (82) par rapport au troisième élément (83) puis un déplacement du troisième élément (83) par rapport au premier élément (81).

15. Dispositif selon la revendication 14, dans lequel le premier élément (81) et le troisième élément (83) comprennent des moyens de verrouillage (822, 832) agencés de sorte que le déplacement du deuxième élément (82) par rapport au premier élément (81) entraine une solidarisation du deuxième élément (82) et du troisième élément (83) et simultanément un déplacement de l'élément (4) de coupe en une position intermédiaire dans laquelle l'élément optique (62) est enfermé dans l'élément (4) de coupe.

16. Procédé d'extraction d'un élément optique (62) dans un câble optique (6), le câble optique (6) incluant une gaine (61) et au moins un élément optique (62) s'étendant à l'intérieur de la gaine (61), à l'aide d'un dispositif (1) conforme à l'une des revendications 1 à 15, le procédé comprenant des étapes de :
- ouvrir une fenêtre (63) dans la gaine (61) du câble (6),
- insérer l'élément (2) de guidage à l'intérieur de la gaine (61) le long de l'élément optique (62) pour acheminer l'élément (4) de coupe jusqu'à un site de coupe,
- actionner à distance l'élément (4) de coupe via l'élément (3) de transmission pour provoquer la coupe de l'élément optique (62) à l'endroit du site de coupe.

## Patentansprüche

1. Extraktionsvorrichtung (1) eines Glasfaserelements (62) in einem Glasfaserkabel (6) des Typs, der eine Ummantelung (61) und wenigstens ein Glasfaserelement (62) einschließt, das sich im Innern der Ummantelung erstreckt, wobei die Vorrichtung umfasst:
- ein Führungselement (2) in länglicher Form, umfassend einen Kanal (23), der sich gemäß einer Längsrichtung des Führungselements erstreckt,
- ein Übertragungselement (3), das sich im Innern des Kanals (23) erstreckt und geeignet ist, in dem Kanal (23) zu gleiten
- ein Schneidelement (4),
in dem das Führungselement (2) geeignet ist, in das Innere der Ummantelung (61) entlang des Glasfaserelements (62) eingeführt zu sein, um das Schneidelement (4) bis zu einem Schneidpunkt zu befördern und das Schneidelement (4) geeignet ist, entfernt über das Übertragungselement (3) betätigt zu sein, um das Glasfaserelement (62) an der Stelle des Schneidpunkts zu schneiden, und
in dem das Schneidelement (4) geeignet ist, über das Übertragungselement (3) zwischen einer ersten ausgefahrenen Position, in der das Schneidelement (4) eine offene Schleife bildet, die geeignet ist das Glasfaserelement (62) aufzunehmen und es festzuhalten, und einer zweiten zurückgezogenen Position, in der das Schneidelement (4) in den Kanal (23) eindringt, verschoben zu werden, wobei das Eindringen des Schneidelements (4) in den Kanal (23) den Schnitt des Glasfaserelements (62) hervorruft, das in dem Schneidelement (4) festgehalten ist.

2. Vorrichtung gemäß Anspruch 1, bei der das Führungselement (2) eine Länge von wenigstens 0,6 Metern, bevorzugt von wenigstens 1 Meter aufweist.

3. Vorrichtung gemäß einem der Ansprüche 1 oder 2, bei der das Führungselement (2) einen Ansatz (24) umfasst, der an einem Einführungsende (21) des Führungselements (2) angeordnet ist und bei dem das Schneidelement (4) gleitet und bei dem der Ansatz (24) und das Schneidelement (4) derart zusammenwirken, dass eine Rotation des Schneidelements (4) im Verhältnis zum Führungselement (2) verhindert wird.

4. Vorrichtung gemäß Anspruch 3, bei der der Ansatz (24) eine verjüngte Form aufweist, um das Einführen des Führungselements (2) in das Innere der Ummantelung (61) zu erleichtern.

5. Vorrichtung gemäß einem der voranstehenden Ansprüche, bei der das Schneidelement (4) einen Haken umfasst.

6. Vorrichtung gemäß einem der voranstehenden Ansprüche, bei der das Schneidelement (4) eine Schneidkante (4243) umfasst, die zum Durchtrennen des Glasfaserelements (62) an der Stelle des Schneidpunkts geeignet ist.

7. Vorrichtung gemäß den Ansprüchen 3 und 6, bei der der genannte Ansatz (24) eine Schneidkante (245) umfasst, die gegenüber der Schneidkante (4243) des Schneidelements (4) angeordnet ist, wobei die Betätigung des Schneidelements (4) das Abscheren des Glasfaserelements (62) zwischen den zwei Schneidkanten (245, 4243) hervorruft.

8. Vorrichtung gemäß Anspruch 7, bei der der Ansatz (24) einen Einschnitt (246) umfasst, um zu verhindern, dass das zu schneidende Glasfaserelement (62) bei der Betätigung des Schneidelements (4) in den Ansatz (24) zum Eingreifen kommt.

9. Vorrichtung gemäß einem der voranstehenden Ansprüche, bei der das Schneidelement (4) ein Ende umfasst, das eine Gleitfläche (427) aufweist, die im Verhältnis zur Längsrichtung des Führungselements (2) geneigt und angeordnet ist, um auf Glasfaserelementen zu gleiten, die in der Ummantelung des Kabels in der Nähe des zu schneidenden Glasfaserelements enthalten sind.

10. Vorrichtung gemäß einem der voranstehenden Ansprüche, bei der das Schneidelement (4) zwei Führungsabschnitte (422, 423) umfasst, die angeordnet sind, um sich auf jeder Seite des zu schneidenden Glasfaserelements (62) zu erstrecken, um das Führungselement (3) entlang dem Glasfaserelement (62) beim Einführen des Führungselements (2) in das Innere der Ummantelung (61) zu führen.

11. Vorrichtung gemäß einem der voranstehenden Ansprüche, bei der das Schneidelement (4) geeignet ist, in einer dritten Zwischenposition verschoben zu sein, in der das Schneidelement (4) eine geschlossene Schleife bildet, die das Glasfaserelement (62) formt, um das Führungselement (3) entlang dem Glasfaserelement (63) beim Einführen des Führungselements in das Innere der Ummantelung (61) zu führen.

12. Vorrichtung gemäß einem der voranstehenden Ansprüche, bei dem das Führungselement (2) ein Einführungsende (21) und ein Behandlungsende (22) umfasst, wobei sich der Kanal (23) zwischen dem Einführungsende (21) und dem Behandlungsende (22) erstreckt und das Schneidelement (4) in der Nähe des Einführungsendes (21) angeordnet ist, wobei die Vorrichtung darüber hinaus ein Betätigungsorgan (7, 8) umfasst, das an das Übertragungselement (3) in der Nähe des Behandlungsendes (22) des Führungselements (2) angeschlossen ist, um das Schneidelement (4) entfernt zu betätigen.

13. Vorrichtung gemäß Anspruch 12, bei der das Betätigungsorgan (7, 8) ein erstes Element (71, 81) umfasst, das im Verhältnis zum Führungselement (2) fest ist, und ein zweites Element (72, 82), das im Verhältnis zum ersten Element (71, 81) mobil ist, wobei das zweite Element (72, 82) an das Übertragungselement (3) angeschlossen ist, wobei das zweite Element (72, 82) geeignet ist, im Verhältnis zum ersten Element (71, 81) verschoben zu werden, um die Betätigung des Schneidelements (4) mithilfe des Übertragungselements (3) hervorzurufen.

14. Vorrichtung gemäß Anspruch 3, umfassend ein drittes Zwischenelement (83), das zwischen dem ersten Element (81) und dem zweiten Element (82) zwischengeschaltet ist, und bei dem eine Verschiebung des zweiten Elements (82) sequenziell eine Verschiebung des zweiten Elements (82) im Verhältnis zum dritten Element (83), dann eine Verschiebung des dritten Elements (83) im Verhältnis zum ersten Element (81) hervorruft.

15. Vorrichtung gemäß Anspruch 14, bei der das erste Element (81) und das dritte Element (83) Verriegelungsmittel (822, 832) umfassen, die derart angeordnet sind, dass die Verschiebung des zweiten Elements (82) im Verhältnis zum ersten Element (81) eine feste Befestigung des zweiten Elements (82) und des dritten Elements (83) und gleichzeitig eine Verschiebung des Schneidelements (4) in eine Zwischenposition nach sich zieht, in der das Glasfaserelement (62) in dem Schneidelement (4) eingeschlossen ist.

16. Extraktionsverfahren eines Glasfaserelements (62) in einem Glasfaserkabel (6), wobei das Glasfaserkabel (6) eine Ummantelung (61) und wenigstens ein Glasfaserelement (62) einschließt, das sich mithilfe einer Vorrichtung (1) gemäß einem der Ansprüche 1 bis 15 im Innern der Ummantelung (61) erstreckt, wobei das Verfahren die Schritte umfasst:
- Öffnen eines Fensters (63) in der Ummantelung (61) des Kabels (6),
- Einfügen des Führungselements (2) im Innern der Ummantelung (61) entlang dem Glasfaserelement (62) zum Verbringen des Schneidelements (4) bis zu einem Schneidsitus
- entferntes Betätigen des Schneidelements (4) über das Übertragungselement (3), um den Schnitt des Glasfaserelements (62) an der Stelle des Schneidsitus hervorzurufen.

## Claims

1. A device (1) for extracting an optical element (62) in an optical cable (6) of the type including a sheath (61) and at least one optical element (62) extending inside the sheath, the device comprising:
- an elongate shaped guide element (2), comprising a channel (23) extending along a longitudinal direction of the guide element,
- a transmission element (3) extending inside the channel (23) and able to slide in the channel (23),
- a cutting element (4),
wherein the guide element (2) is able to be inserted inside the sheath (61) along the optical element (62) to convey the cutting element (4) up to a cutting point and the cutting element (4) being able to be remotely actuated via the transmission element (3) to cut the optical element (62) at the place of the cutting point, and
wherein the cutting element (4) is able to be moved via the transmission element (3), between a first extended position in which the cutting element (4) forms an open loop able to receive the optical element (62) and to retain it and a second retracted position wherein the cutting element (4) penetrates the channel (23), the penetration of the cutting element (4) in the channel (23) causing the optical element (62) retained in the cutting element (4) to be cut.

2. The device according to claim 1, wherein the guide element (2) has a length of at least 0.6 meter, preferably of at least 1 meter.

3. The device according to one of claims 1 and 2, wherein the guide element (2) comprises a tip (24) arranged at an introduction end (21)of the guide element (2) and in which the cutting element (4) slides, and wherein the tip (24) and the cutting element (4) cooperate so as to prevent the cutting element (4) from rotating with respect to the guide element (2).

4. The device according to claim 3, wherein the tip (24) has a tapered shape to facilitate inserting the guide element (2) inside the sheath (61).

5. The device according to one of the preceding claims, wherein the cutting element (4) comprises a hook.

6. The device according to one of the preceding claims, wherein the cutting element (4) comprises a cutting edge (4243) adapted to cut off the optical element (62) at the place of the cutting point.

7. The device according to claims 3 and 6, wherein the tip (24) comprises a cutting edge (245) arranged facing the cutting edge (4243) of the cutting element (4), the actuation of the cutting element (4) causing the optical element (62) to be sheared between both cutting edges (245, 4243).

8. The device according to claim 7, wherein the tip (24) comprises a notch (246) to avoid that the optical element (62) to be cut comes to be engaged in the tip (24) upon actuating the cutting element (4).

9. The device according to one of the preceding claims, wherein the cutting element (4) comprises an end having a slipping surface (427) tilted with respect to the longitudinal direction of the guide element (2) and arranged to slip on optical elements contained in the sheath of the cable in the vicinity of the optical element to be cut.

10. The device according to one of the preceding claims, wherein the cutting element (4) comprises two guide portions (422, 423) arranged to extend on either side of the optical element to be cut (62) in order to guide the guide element (3) along the optical element (62) upon inserting the guide element (2) inside the sheath (61).

11. The device according to one of the preceding claims, wherein the cutting element (4) is able to be moved into a third intermediate position in which the cutting element (4) forms a closed loop surrounding the optical element (62) to guide the guide element (3) along the optical element (62) upon inserting the guide element inside the sheath (61).

12. The device according to one of the preceding claims, wherein the guide element (2) comprises an inserting end (21) and a handling end (22), the channel (23) extending between the inserting end (21) and the handling end (22) and the cutting element (4) being arranged in proximity to the inserting end (21), the device further comprising an actuating member (7, 8) connected to the transmission element (3) in proximity to the handling end (22) of the guide element (2) to remotely actuate the cutting element (4).

13. The device according to claim 12, wherein the actuating member (7, 8) comprises a first element (71, 81) being fixed with respect to the guide element (2) and a second element (72, 82) being mobile with respect to the first element (71, 81), the second element (72, 82) being connected to the transmission element (3), the second element (72, 82) being able to be moved with respect to the first element (71, 81) to cause the cutting element (4) to be actuated through the transmission element (3).

14. The device according to claim 13, comprising a third intermediate element (83) interposed between the first element (81) and the second element (82), and wherein a movement of the second element (82) sequentially causes the second element (82) to be moved with respect to the third element (83) and then the third element (83) to be moved with respect to the first element (81).

15. The device according to claim 14, wherein the first element (81) and the third element (83) comprise locking means (822, 832) arranged such that the movement of the second element (82) with respect to the first element (81) causes the second element (82) and the third element (83) to be secured and simultaneously the cutting element (4) to be moved into an intermediate position in which the optical element (62) is enclosed in the cutting element (4).

16. A method for extracting an optical element (62) in an optical cable (6), the optical cable (6) including a sheath (61) and at least one optical element (62) extending inside the sheath (61), using a device (1) in accordance with one of claims 1 to 15, the method comprising steps of:
- opening a window (63) in the sheath (61) of the cable (6),
- inserting the guide element (2) inside the sheath (61) along the optical element (62) to convey the cutting element (4) up to a cutting site,
- remotely actuating the cutting element (4) via the transmission element (3) to cause the optical element (62) to be cut at the place of the cutting site.
